(19) Europäisches Patentamt
European Patent Office
Office européen des brevets

(11) **EP 0 993 251 B1**

(12) **EUROPÄISCHE PATENTSCHRIFT**

(45) Veröffentlichungstag und Bekanntmachung des Hinweises auf die Patenterteilung:
**12.09.2001 Patentblatt 2001/37**

(51) Int Cl.[7]: **A23F 5/14**, A23F 5/20, A23F 5/24

(21) Anmeldenummer: **96942541.2**

(22) Anmeldetag: **27.12.1996**

(86) Internationale Anmeldenummer:
**PCT/HU96/00083**

(87) Internationale Veröffentlichungsnummer:
**WO 98/28986 (09.07.1998 Gazette 1998/27)**

(54) **GENUSSMITTEL-ZUSCHLAG**

ADDITIVE FOR STIMULANTS

ADDITIF POUR PRODUITS STIMULANTS

(84) Benannte Vertragsstaaten:
**CH DE GB LI**

(43) Veröffentlichungstag der Anmeldung:
**19.04.2000 Patentblatt 2000/16**

(73) Patentinhaber:
• **Pintz, György**
  **1012 Budapest (HU)**
• **Paczolay, Kinga**
  **1016 Budapest (HU)**

(72) Erfinder:
• **Pintz, György**
  **1012 Budapest (HU)**
• **Paczolay, Kinga**
  **1016 Budapest (HU)**

(74) Vertreter: **Rasch, Michael et al**
**Patent- und Rechtsanwälte Lewinsky & Partner,**
**Gotthardstrasse 81**
**80689 München (DE)**

(56) Entgegenhaltungen:
WO-A-95/17826          US-A- 4 076 856

• **PATENT ABSTRACTS OF JAPAN vol. 010, no. 373 (C-391), 12.Dezember 1986 & JP 61 166379 A (SHINKICHI KOBAYASHI), 28.Juli 1986,**
• **DATABASE WPI Section Ch, Week 8435 Derwent Publications Ltd., London, GB; Class D13, AN 84-216078 XP002038796 & JP 59 125 844 A (IWASAKI H) , 20.Juli 1984**
• **CHEMICAL ABSTRACTS, vol. 108, no. 7, 15.Februar 1988 Columbus, Ohio, US; abstract no. 54687, YOKOGOSHI, HIDEHIKO ET AL: "The effects of caffeine and caffeine -containing beverages on the disposition of brain serotonin in rats" XP002038795 & AGRIC. BIOL. CHEM. (1987), 51(12), 3281-6 CODEN: ABCHA6;ISSN: 0002-1369,**
• **DATABASE WPI Section Ch, Week 9150 Derwent Publications Ltd., London, GB; Class D13, AN 91-366294 XP002038797 & JP 03 247 239 A (JAPAN TOBACCO INC) , 5.November 1991**

**Beschreibung**

Gegenstand der Erfindung ist ein Genussmittel-Zuschlag, vor allem für die Verminderung der schädlichen Wirkungen von Kaffeegetränken.

Der Kaffee ist seit Jahrhunderten eines der beliebtesten Genußmittel. Der Kaffee hat - Dank seinem Koffeingehalt - eine anregende Wirkung. Der Kaffeekonsum hat aber neben seiner Genußeigenschaften auch ungünstige Folgen. Er zerrüttet das Säure-Basis Gleichgewicht des Organismus, wirkt anregend auf den Magen. Das Koffein besitzt auch eine toxische Wirkung. Der Kaffee erhöht das Risiko eines Herzinfarkts (American Journal of Epidemiology, 1988/9, 570-8, Rosenberg et al.), schwächt die Wirksamkeit des Immunsystems ab (International Journal of Immunopharmacology 1990/1, 129-34, Melamed et al.), kann Genmutationen verursachen (Food-Chem-Toxicol. 1989/4, 227-32, Aeschbacher et al.) und das Risiko der Entstehung mehrerer Krebskrankheiten erhöhen. Natürlich sind mäßige Kaffeetrinker den obigen Gefahren weniger ausgesetzt.

Der Ersatz des Kaffees durch ein anderes Getränk ist wegen seines Genusswertes und seiner vorzüglichen anregenden Wirkung nicht zu erwarten. Deswegen kann ein jedes Bestreben die gesundheitsschädigende Wirkung des Kaffees zu vermindern als erwünscht betrachtet werden. So ein Bestreben war auch die Entwicklung von koffeinfreiem Kaffee. Der nach dem Wimmer-Roselius Verfahren gereinigte rohe Kaffee wird mit Wasserdampf behandelt, dann extrahiert und geröstet. Ein Nachteil des koffeinfreien Kaffees besteht darin, daß ihn wegen seiner geringen anregenden Wirkung viele nicht mögen.

Mehrere Verfahren sind bekannt, welche bei Bewahrung des Koffeingehalts bestimmte Stoffe mittels Lösemittel aus dem Kaffee extrahieren. Solche Verfahren sind in den DE-OS 16 92 284, DE-OS 19 60 694, DE-OS 20 31 830, DE-OS 26 18 545, DE-PS 27 20 204, CH-PS 568 719 enthalten. Nachteil dieser Verfahren ist, daß sie das Aroma des Kaffees mehr oder weniger verändern, da die Extrahierung nicht mit entsprechender Selektivität durchgeführt werden kann.

Patentschrift GB 2 895 968 präsentiert so eine Tee-Aromatisierkomposition, bei welcher aus der das Aroma gebenden ätherischen ölphase eine Emulsion hergestellt, und danach pulverisiert wird. Der Nachteil der Lösung besteht darin, daß das Präparat keine Gesundheitsschutzwirkung besitzt und ferner nicht geeignet ist zur Herstellung von sich im Kaffee auflösenden, nur flüssige Phasen enthaltenden Zutaten. Patentschrift FR 2 648 679 enthält ein aus ungeröstetem Kaffee und getrocknetem Getreide, Obst bestehendes natürliches vitaminhaltiges pulverisiertes Präparat, aus dem Getränke oder Cakes zubereitet werden können. Sein Nachteil ist, daß es zum bereits fertigen, traditionellen Kaffee nicht hinzugegeben werden kann, weil es nichtwasserlösliche Teilchen enthält. Unvorteilhaft ist auch, daß es den gewohnten Geschmack und das Aroma des Kaffees verändern würde.

Patentschrift FR 2 662 585 präsentiert eine Pulvermischung, welche für die Zubereitung von türkischem Kaffee dient und fein gemahlenes Kaffee und Süßstoff enthält. Nachteilig ist, daß die Mischung keine gesundheitsschützende Wirkung besitzt und nichtwasserlösliche Kaffeeteilchen enthält. Gegenstand der DE-OS 26 12 782 und US 4 076 856 ist: Verwendung von Pyridin-Antagonisten für Methylxanthine zur Herabsetzung ihrer stimulierenden Wirkung in Lebensmittelzubereitungen. Ihr Nachteil ist, daß die Verbraucher von schwarzem Kaffee diesen eben wegen seiner stimulierenden Wirkung trinken, deswegen ist die Herabsetzung dieser Wirkung allein im Falle von Kaffee nicht erwünscht.

Patentschrift JP 61 166 379 beschreibt ein gesundes, anerkanntes Nahrungsmittel, das hauptsächlich als Tablette verbraucht wird. Das Präparat enthält Löwenzahnkrautwurzel mit Chlorophyll, Vitaminen und Mineralstoffen.

Patentschrift JP 59 125 844 beschreibt einen Kaffee, bei welchem zu koffeinfreiem geröstetem Instant-Kaffee, Löwenzahnkrautwurzel, sowie japanische und chinesische Heilkräuter hinzugemischt werden. Das so erhaltene Getränk ist - wie ein jeder koffeinfreier Kaffee - frei von den schädlichen Wirkungen des Koffeins.

Im Falle der Patentschrift JP 3 247 239 wird zum gerösteten gemahlenen koffeinarmen Kaffee auch Löwenzahnkrautwurzel hinzugemischt.

Eine komplexe Verminderung der schädlichen Folgen des Kaffeetrinkens ist das Ziel der Offenlegungsschrift WO 95/17826. Nachteil dieser Lösung ist, daß nach unseren Versuchen ein dauerndes Konsumieren ungünstige Nebenwirkungen verursachen kann und das es von kardiologischem Standpunkt wirkungslos war.

Ziel der Erfindung ist die Beseitigung der Nachteile der bisher bekannten Lösungen und die Entwicklung so eines Kaffee-Zuschlags, welcher die schädlichen Wirkungen des Kaffees auf natürlichem Wege verringert, und zu gleicher Zeit den gewohnten Geschmack des Kaffees nicht beeinflußt.

Grundlage der erfindungsmässigen Idee ist die Erkenntnis, daß wenn man zum zubereiteten Kaffee einen zur Verringerung des sauren Gehalts geeigneten und die Entgiftungsfähigkeit der Leber steigernden Heilkräuterextrakt hinzutut, so erzielt man eine günstigere Wirkung als zuvor.

Entsprechend der Zielsetzung ist der erfindungsmäßige Genußmittel-Zuschlag, vor allem für die Verminderung der schädlichen Wirkungen von Kaffeegetränken, welcher ein oder mehrere Vitamine, gegebenenfalls ein oder mehrere Mineralsalze und Löwenzahnkrautwurzel-Extrakt enthält so zubereitet, daß er einen Anis-Extrakt enthaltenden Auszug enthält.

Eine weitere Eigentümlichkeit des erfindungsmäßigen Zuschlags besteht darin, daß er Adenosin enthält. Charakteristisch kann auch sein, daß der Auszug Kardamomsamen-Extrakt enthält. Die Vitamine enthalten eine Mischung von Vitaminen $B_1$, $B_6$ und/oder Nikotinamid.

Der erfindungsmäßige Zuschlag besitzt zahlreiche Vorteile. Er bewirkt die Verminderung der toxischen und sauren Wirkung des Kaffees. Die Verdauung im Magen, die Fähigkeit Vitamine und Mineralsalze zu absorbieren, die entgiftende Funktion der Leber bessern sich. Die während des Kaffeetrinkens sich meistens entleerenden Vitamine werden ersetzt.

Im weiteren präsentieren wir den erfindungsmäßigen Zuschlag näher aufgrund einzelner Ausführungsbeispiele. Der Zuschlag enthält in der Regel folgende Wirkstoffe:

A/ Anis-Extrakt (Anisi fructus), welcher durch Pulverisierung, Einweichung und Eindampfung von Anissamen hergestellt wird. Die Herstellung des Extrakts erfolgt wie bei der Löwenzahnkrautwurzel. Der erhaltene Extrakt enthält etwa 2 vol.% der Droge.

B/ Löwenzahnkrautwurzel-Extract (Taraxaci radix) , welcher durch Pulverisierung, Einweichung und Eindampfung der Wurzel hergestellt wird. Die trokkene Wurzel wird pulverisiert und eine Stunde lang in Wasser mit einer Temperatur von 90 °C eingeweicht, danach wird sie gefiltert und eingedampft. Der erhaltene Extrakt enthält etwa 10 vol.% der Droge.

C/ Adenosin, welcher - laut unserer Beobachtung - hat einen Koffeinantagonist- Effekt hat.

D/ Kardamomsamen-Extrakt (Elettaria cardamomum), welcher durch Pulverisierung, Einweichung und Eindampfung von Kardamomsamen hergestellt wird. Die Herstellung des Extrakts erfolgt wie bei der Löwenzahnkrautwurzel. Der erhaltene Extrakt enthält etwa 2 vol.% der Droge.

E/ Eine Mischung von Mineralsalzen, welche vorteilhaft Natriumdihydrogen Phosphoricum und vor allem diejenigen Mineralsalze enthält, die im durch Destillierung zubereiteten Kaffee fehlen. Natriumdihydrogen Phosphoricum ist geeignet die toxische Wirkung des Kaffees zu vermindern. Eine zweckmässige Zusammensetzung der Mineralsalzmischung auf die Gesamtmasse der Mineralsalze bezogen: 20 vol.% Magnesiumsalz, z.B. Magnesiumsulfat, 29 vol.% Kalziumsalz, z.B. Kalziumlactat, 50 vol.% Natriumdihydrogen Phosphoricum und 1 vol.% Kaliumsalz, z.B.Kaliumchlorid.

F/ Vitamine, welche vor allem diejenigen, besonders zum B-Vitamin-Komplex gehörenden Vitamine enthalten, die infolge des Kaffeekonsums aus dem Organismus entleert werden. Eine zweckmäßige Zusammensetzung der Vitaminmischung bezogen auf ihre Gesamtmasse 10 vol.% Vitamin $B_1$, 5 vol.% Vitamin $B_2$, 10 vol.% Vitamin $B_6$, 75 vol.% Nikotinamid.

Außer den obigen Wirkstoffen kann das erfindungsmäßige Präparat auch weitere Stoffe enthalten wie Trägerstoff, Sahne, Zucker, Sorbit, Süßstoff, Milch, Milchpulver, Kakao, Kaffeeweisser, Milcheiweiss, Fett, Emulgator, Stabilisator, Kohlehydraten, Aromastoffe, Farbstoffe, andere Vitamine, Spurelemente, Drogen, Mineralsalze usw. während des Produktionsverfahrens werden die Komponente des Zuschlags in Pulverform auf obige Weise hergestellt und in einem Verhältnis gemäß Beispiel Nr. 1 etwa 20 Minuten lang durch rühren homogenisiert. Nach der Homogenisierung wird der Zuschlag in Pulverform zugerichtet. Die Zurichtung des Zuschlags kann nicht nur als Pulver, sondern auch als Tabletten, Brausetabletten, Flüssigkeit usw. erfolgen. Im Nachstehenden geben wir die Zusammensetzung von einem Beispiel bekannt. Die angegebenen Mengen beziehen sich auf eine Portion (50-150 ml) Kaffee, eine Portion Kaffee enthielt 6-7 g zermahlenen gerösteten Bohnenkaffee.

| [Mg] | Beispiel 1 |
|---|---|
| A/ Anis-Extrakt | 9,0 |
| B/ Löwenzahnkraut-Extrakt | 8,0 |
| C/ Adenosin | 2,0 |
| D / Kardamomsamen-Extrakt | 4,0 |
| E/ Mineralsalz-Mischung | 4,0 |
| F/ Vitamine | 8,0 |
| G/ Trägerstoff | 2465,0 |
| | 2500,0 |

Der nach Beispiel Nr. 1. hergestellte Zuschlag ist zur Verminderung der schädlichen Wirkungen des Kaffees geeignet. Der Zuschlag laut Beispiel Nr. 1. beeinträchtigt leicht den Geschmack des Kaffees, und gleichzeitig hat auch eine erhöhte gesundheitsfördernde Wirkung. Das Ergebnis der klinischen Untersuchung war auch günstig. Bei der Mehrheit der untersuchten Personen wurde eine ausdrückliche Besserung hinsichtlich Sodbrennen, geistige Tätigkeit, Müdigkeit, Allgemeinbefinden und Verdauung verzeichnet. Bei Personen die zum Schwitzen neigen, hat sich das Schwitzen nach dem Kaffeetrinken gemäßigt Schädliche Wirkungen wurden bei niemanden festgestellt.

Wir haben mit dem Präparat auch klinische kardiologische Untersuchen mit Kontrollgruppe durchgeführt. Das Präparat hat die vom Kaffee verursachen Blutdruckund Pulserhöhung bedeutsam gemäßigt. Die Wirkung des mit dem Präparat konsumierten Kaffees auf das allgemeine Wohlbefinden wurde um 80 % günstiger gefunden, als im Falle von ohne die Zutat getrunkenem Kaffee.

Der erfindungsmäßige Genussmittel-Zuschlag kann für die Verminderung der schädlichen Wirkung von koffeinhaltigen Getränken verwendet werden.

## Patentansprüche

1. Genußmitel-Zuschlag, vor allem für die Verminderung der schädlichen Wirkungen von Kaffeegetränken, welcher ein oder mehrere Vitamine, Löwenzahnkrautwurzel-Extrakt und gegebenenfalls ein oder mehrere Mineralsalze enthält, **dadurch gekennzeichnet, daß** er einen Anis-Extrakt enthaltenden Auszug enthält.

2. Zuschlag nach Anspruch 1, **dadurch gekennzeichnet**, **daß** er Adenosin enthält.

3. Zuschlag nach Anspruch 1 oder 2, **dadurch gekennzeichnet, daß** der Auszug Kardamomsamen-Extrakt enthält

4. Zuschlag nach Anspruch 1 oder 2, **dadurch gekennzeichnet, daß** die Vitamine eine Mischung von Vitaminen $B_1$, $B_6$ und/oder Nikotinamid enthalten.

## Claims

1. Additive for stimulants, useful in particular to reduce the health-damaging effects of coffee beverages, containing one or several vitamins, dandelion root extract, and, if required, one or several mineral salts, **characterized thereby** that it contains a compound of an extract of anise.

2. Additive according to claim 1, **characterized thereby** that it contains adenosine.

3. Additive according to claim 1 or 2, **characterized thereby** that the compound contains an extract of cardamom seeds.

4. Additive according to claim 1 or 2, **characterized thereby** that the vitamins contain a mixture of the vitamins $B_1$, $B_6$ and/or nicotinamide.

## Revendications

1. Additif pour aliments stimulants, surtout pour diminuer les effets nocifs des boissons à base de café, qui contient une ou plusieurs vitamines, de l'extrait de racine de pissenlit et éventuellement un ou plusieurs sels minéraux, **caractérisé en ce qu'**il contient un extrait contenant de l'extrait d'anis.

2. Additif selon la revendication 1, **caractérisé en ce qu'**il contient de l'adénosine.

3. Additif selon la revendication 1 ou 2, **caractérisé en ce que** l'extrait contient de l'extrait de graine de cardamome.

4. Additif selon la revendication 1 ou 2, **caractérisé en ce que** les vitamines contiennent un mélange de vitamines $B_1$, $B_6$ et/ou de nicotinamide.